# EUROPEAN PATENT SPECIFICATION

(11) **EP 0 408 858 B1**
(45) Date of publication and mention of the grant of the patent: **15.12.1993**
(21) Application number: 90109579.4
(22) Date of filing: 21.05.1990
(51) Int. Cl.: C09D 133/04, C08F 220/10

(54) **Copolymers for use in high solids, low volatile organic content coatings**
Copolymere zur Verwendung für Beschichtungen mit gering flüchtigen organischen Anteilen und hohen Feststoffgehalten
Copolymères utiles comme revêtements à haute teneur de solides contenant des composants organiques de faible volatilité

(30) Priority: 19.05.1989 US 353990
(43) Date of publication of application: 23.01.1991
(73) Proprietor: BASF Corporation, Clifton, New Jersey 07015-6001 (US)
(72) Inventor: Bajc, Gerald L., Perrysburg, Ohio 43551 (US); Bard, Charles Z., Maumee, Ohio 43537 (US); Finkenauer, Horst J., Waterville, Ohio 43566 (US); Shepler, Stewert, Bowling Green, Ohio 43402 (US); Beck, George G., Whitehouse Ohio 43571 (US)
(74) Representative: Münch, Volker, Dr.

(56) References cited:
- EP-A- 0 295 784
- DE-A- 2 942 327
- DE-A- 3 442 232
- DE-C- 2 626 900
- DE-C- 2 635 123
- DE-C- 2 647 314
- US-A- 3 028 367
- US-A- 4 146 519
- US-A- 4 177 183
- US-A- 4 210 702
- US-A- 4 245 074

## Description

### FIELD OF INVENTION

The present invention relates to low volatile organic content solvent-borne coatings especially useful in automotive paint compositions. Compositions made from such coatings can serve as the vehicle for low volatile content sealers, basecoats, clear-coats, and single-stage color autmotive paint coatings. Such paint compositions can use both isocyanate and non-isocyanate curing mechanisms.

### BACKGROUND AND PRIOR ART

One approach to lowering solvent content of coatings has focused on lowering molecular weight, which in turn reduces viscosity, and the corresponding amount of solvent required for coating application. It is well-known (Journal of Coatings Technology, 57:83-88, September, 1985) that organic thiols serve as molecular weight regulators and can be used to produce low molecular weight acrylics.

A drawback of using mercaptan regulators or chain transfer agents is the strong odor associated with the final product. U.S. Patent 4,245,074 claims the use of a carboxylic acid functional mercaptan as a regulator to make polymers which are odorless.

An approach based on polyesters is another route to high solid content coatings. Polyesters can either be used as the primary vehicle or as hydroxyl functional additives which lower coating application viscosity and subsequently crosslink into the film. Likewise, U. S. Patent 3,028,367 identifies use of dihydric and trihydric alcohols as components of a possible solventless coating vehicle. Several methods have been disclosed in the literature which make use of a co-polymer consisting of an addition product of an organic acid and a glycidyl ester of aliphatic carboxylic acid with a tertiary carbon atom. U. S. Patent 4,210,702, British Patent 1,060,711 and British Patent 1,009,217 all use some variation of this procedure.

Conventional acrylics and polyesters examined for use as low volatile organic content vehicles, while high in solid content, produced coatings which remain tacky for long periods of time when used at conventional application viscosity. In addition some of these vehicles did not have adequate pot-life for use in commercial applications.
EP-A2-295784 discloses a hydroxyl-containing polymer prepared from an α,β-unsaturated carboxylic acid, an epoxy compound and a hydroxyalkyl ester of an ethylenically unsaturated carboxylic acid. The polymer has a weight average molecular weight of less than 15,000 and can be cured with polyisocyanate. The glass transition temperature of the polymers is not indicated in EP-A2-295784.
DE-A-3442232 discloses a branched hydroxyl-containing polymer with a weight average molecular weight of 2,000 to 200,000 and a glass transition temperature Tg of -20°C to 100°C.

US-A-4,276,212 discloses high solids coating compositions containing an acrylic polymer with a number average molecular weight of about 500 to 4,500 and a glass transition temperature of about -20°C to +20°C.
EP-A-29598 discloses high solids coating compositions containing an acrylic polymer with a number average molecular weight of 500 to 10,000 and a glass transition temperature of about -20°C to 20°C.

US-A-4,397,989 discloses high solids coating compositions containing an acrylic polymer with a number average molecular weight of 500 to 20,000 and a glass transition temperature of 0°C to 30°C.
US-A-4,548,963 discloses a coating composition containing a low molecular weight acrylic polymer with a number average molecular weight of about 1,000 to 5,500.
None of these documents US-A-4,276,212, EP-A-29598, US-A-4,397,989 and US-A-4,548,963 discloses a polymer resulting from the polymerization of vinyl monomers, wherein one vinyl monomer is acrylic acid and wherein the polymer is subsequently or in situ reacted to Cardura E through organic acid groups.

GB-B-1,515,868 discloses a high solids coating composition containing a hydroxyl-containing polymer with a number average molecular weight of about 500 to 2,000. US-A-3,549,583 discloses a coating composition comprising a copolymer containing a 1:1 addition product component of a carboxyl group of an α,β-unsaturated acid and an epoxy group of a glycidyl ester of a tertiary aliphatic acid.

The glass transition temperature of the polymers is not indicated in US-A-4,548,963, US-A-3,549,583 and GB-B-1,515,868. Furthermore, GB-B-1,515,868 precludes the use of chain transfer agents for the polymerization of the polymers.

### SUMMARY OF THE INVENTION

The present invention is directed to a copolymer which, when crosslinked with isocyanate or non-isocyanate crosslinker, forms coatings, which have excellent physical properties with short tack-free and dust-free time, excellent pot-life, and no strong mercaptan odor. The copolymer consists of the polymerization product of ethylenically unsaturated monomers containing hydroxyl groups and other vinyl monomers in the presence of chain transfer agent, wherein the copolymer components are combined in such a manner to give a polymer with a moderate glass transition temperature, preferably between -3°C to 35°C (using the Fox method of Tg calculation), and a relative weight average molecular weight of less than 10,000 preferably from 1,000-7,000 based on GPC using polystyrene standards, wherein the ethylenically unsaturated hydroxyl monomers are selected from hydroxy-functional vinyl compounds such as hydroxyethyl methacrylate, hydroxybutyl methacrylate, secondary hydroxybutyl methacrylate, hydroxybutyl acrylate, secondary hydroxybutyl acrylate, allyl alcohol, hydroxypropyl methacrylate, hydroxyethyl acrylate, hydroxypropyl acrylate, Tone 100, wherein the other vinyl monomers are selected from vinyl compounds such as vinyl toluene, cyclohexyldiacrylate, t-butylaminoethyl methacrylate, methacrylic acid, maleic acid, acrylic acid, glycidyl acrylate, glycidyl methacrylate, vinyl pyrrolidone, styrene, alkyl acrylates such as n-butyl acrylate, 2-ethylhexyl acrylate, ethyl acrylate, lauryl acrylate, stearyl acrylate, alkyl methacrylates such as n-butyl methacrylate, isobutyl methacrylate, isodecyl methacrylate, lauryl methacrylate, 2-ethylhexyl methacrylate.

One such copolymer is a copolymer, wherein the other vinyl monomers consist of 3-50 weight % styrene and/or α-methyl styrene and 5-14 weight % of acrylic and/or methacrylic acid and 3-50 weight % of a monomethacrylate or acrylate ester of an alcohol having 1-12 carbon atoms and selected from the group of lauryl methacrylate, isodecyl methacrylate, lauryl acrylate and stearyl acrylate, optionally in combination with other monomethacrylate or acrylate esters of an alcohol having 1-12 carbon atoms.
The copolymer can also consist of 14.75 weight % hydroxypropyl methacrylate, 15.1 weight % n-butyl methacrylate, 24.11 weight % styrene, 13.23 weight % hydroxyethyl methacrylate, 26.1 weight % lauryl methacrylate, 0.94 weight % acrylic acid, 2.44 weight % 2,2'-azobis (methylbutyronitrile) and 3.33 weight % 2-mercaptoethanol or 14.78 weight % hydroxypropyl methacrylate, 3.79 weight % n-butyl methacrylate, 0.95 weight % acrylic acid, 24.1 weight % styrene, 13.26 weight % hydroxyethyl methacrylate, 26.1 weight % isodecyl methacrylate, 11.25 weight % n-butyl acrylate, 2.44 weight % 2,2'-azobis (methylbutyronitrile) and 3.33 weight % 2-mercaptoethanol.
The copolymer can also consist of the polymerization product of ethylenically unsaturated monomers containing vinyl monomers, wherein at least one of the vinyl monomers is acid functional, and optionally vinyl monomers containing hydroxyl groups wherein the copolymer components are combined in such a manner to give a polymer with a moderate glass transition temperature as defined above and a relative weight average molecular weight of less than 10,000 preferably from 1,000-7,000 based on GPC using polystyrene standards and which is subsequently or in situ reacted to an oxirane functional compound, such as the glycidyl ester of an organic acid, through organic acid groups.

One such coating composition consists of 3-50 weight % n-butyl methacrylate, 3-50 weight % styrene, 9-24 weight % hydroxyethyl methacrylate, 5-14 weight % acrylic acid, 16-43 weight % Cardura E-10, 1-5 weight % 2-mercaptoethanol, and 0.5-6 weight % VAZO 88® (1,1'-azobis(cyanocyclohexane). Coating compositions containing this copolymer are useful in automotive paint applications.

Coatings made with this copolymer can acceptably disperse pigments and are compatible with many commercially available hardeners. Finally, adhesion of coatings prepared with this copolymer is excellent, especially when used as a clearcoat over water-born basecoats. While this invention is not limited to the automobile refinishing market, coatings parepared for this market which use this copolymer, such as single stage color coats, basecoats and clearcoats show excellent cure, low volatile organic content at application viscosity, drytime, appearance, pot-life and physical properties when cured with isocyanate. Automotive paint compositions of this type are disclosed in related U.S. Patent application filed and incorporated herein by reference. The invention is also suitable for use in a sealer composition. Sealer compositions are disclosed and claimed in related U.S. Application filed and incorporated herein by reference.

### GENERAL DESCRIPTION OF INVENTION

The present invention is directed to a copolymer which, when crosslinked with isocyanate or non-isocyanate crosslinker, form coatings, which have excellent physical properties with short tack-free and dust-free time, excellent pot-life, good pigment dispersion, and no strong mercaptan odor. The copolymer consists of: the polymerization product of ethylenically unsaturated monomers containing hydroxyl groups and other vinyl monomers wherein the copolymer components are combined in such a manner to give a polymer with a moderate glass transition temperature (using the Fox method of Tg calculation) and a relative weight average molecular weight of 1000-7000 based on GPC using polystyrene standards wherein the ethylenically unsaturated hydroxyl monomers are selected from hydroxy functional vinyl compounds such as hydroxyethyl methacrylate, allyl alcohol, hydroxypropyl methacrylate, hydroxyethyl acrylate TONE® 100, hydroxybutyl acrylate, secondary hydroxy butyl acrylate, hydroxypropyl acrylate, wherein the other vinyl monomers are selected from vinyl toluene, vinyl pyrrolidone, glycidyl acrylate, glydicyl methacrylate, acrylic acid, methacrylic acid, t-butyl aminoethyl methacrylate styrene; alkyl acrylates such as n-butyl acrylate, 2-ethylhexyl acrylate, ethyl acrylate, lauryl acrylate, stearyl acrylate, cyclohexyldiacrylate, alkyl methacrylates such a n-butyl methacrylate, isobutyl methacrylate, isodecyl methcarylate, lauryl methacrylate, 2-ethylhexyl methacrylate, ethyl methacrylate, methyl methacrylate.

The copolymer may consist of:
the polymerization products of ethylenically unsaturated monomers containing vinyl monomers wherein at least one of the vinyl monomers is acid functional and optionally vinyl monomers containing hydroxyl groups wherein the copolymer components are combined in such a manner to give a polymer with a glass transition between -10°C and 35°C (using the Fox method of Tg calculation) and a relative weight average molecular weight of 1,000-7,000 based on GPC using polystyrene standards and which is subsequently or in situ reacted to the glycidyl ester of an organic acid through organic acid groups. By organic acid we mean both the acid as well as the anhydride form of the group. This copolymer consists of:
3-50 weight % n-butyl methacrylate, 3-50 weight % styrene, 9-24 weight % hydroxyethyl methacrylate, 5-14 weight % acrylic acid, 16-43 weight % glycidyl ester of Versatic 10 carboxylic acid, 1-5 weight % 2-mercaptoethanol and 0.5-6 weight % 1,1'-azobis-(cyanocyclohexane).

The copolymer may also consist of:
389 parts (14.75 weight %) hydroxypropyl methacrylate, 398 parts (15.1 weight %) n-butyl methacrylate, 636 parts (24.11 weight %) styrene, 349 parts (13.23 weight %) hydroxy ethyl methacrylate, 688 parts (26.1 weight %) lauryl methacrylate, 25 parts (0.94 weight %) acrylic acid, 64.6 parts (2.44 weight %) 2,2'-azobis (methylbutyronitrile) and 88 parts (3.33 weight %) 2-mercaptoethanol or 390 parts (14.78 weight %) hydroxypropyl methacrylate, 100 parts (3.79 weight %) n-butyl methacrylate, 25 parts (0.95 weight %) acrylic acid, 635 parts (24.1 weight %) styrene, 350 parts (13.26 weight %) hydroxyethyl methacrylate, 688 parts (26.1 weight %) isodecyl methacrylate, 297 parts (11.25 weight %) n-butyl acrylate, 64.6 parts (2.44 weight %) 2,2'-azobis (methylbutyronitrile) and 88 parts (3.33 weight %) 2-mercaptoethanol.

Coating compositions containing this copolymer are useful in automotive paint applications.

The preferred embodiment of this invention entails polymerization of ethylenically unsaturated monomers, one of which is an α,β-unsaturated acid containing moiety, and another of which is a hydroxyl containing α,β-unsaturated moiety, in the presence of initiator and 1-5 weight % of chain transfer agent, and in situ or subsequently forming the addition product of the acid group attached to the previously mentioned organic acid to a glycidyl ester of an aliphatic carboxylic acid with a tertiary carbon atom. The ethylenically unsaturated monomers consist of 3-50 weight % styrene and/or α-methyl styrene, and 5-14 weight % of acrylic and/or methacrylic acid, and 3-50 weight % of a monomethacrylate or acrylate ester of an alcohol having 1-12 carbon atoms, for instance n-butyl methacrylate, methyl methacrylate, lauryl methacrylate, isodecyl methacrylate, methyl acrylate, and butyl acrylate. For purposes of Tg calculation, the acrylic acid/Cardura E10 adduct's Tg is assumed to be similar to isodecyl methacrylate.

Representative examples of chain transfer agents are benzyl alcohol, 2-mercaptoethanol, 3-mercaptopropanol, and 2-hydroxyethyl 3-mercaptopropionate, ethyl mercaptan, butyl mercaptan, and dodecanethiol.

Initiators which may be used, but not limited to, include tertiary butyl peroxide, VAZO® 67 (2,2'-azobis(methylbutyronitrile)) and VAZO® 88 (1,1'-azobis (cyanocyclohexane)). Solvents suitable for reaction should be relatively inert to free radicals and chain transfer agents. Such solvents include, among others xylene, methyl ethyl ketone, methyl amyl ketone, n-butyl acetate and toluene.

The following examples are used for illustration of the described invention and are not meant to limit in any way the scope of the invention:

### EXAMPLE 1

### PART A

A mixture of 387 gms. methyl amyl ketone and 55 gms. of methyl ethyl ketone was placed in a flask fitted with agitator, three addition feed pumps, reflux condenser, thermocouple probe and inert gas inlet. The flask was purged with nitrogen and the mixture was heated to reflux (about 125-131 C) with stirring, while a slow stream of nitrogen was passed through the system.

### PART B

Each of the following was concurrently added over approximately 150 minutes:
1) a premixed monomer solution of 499 gms. normal butyl methacrylate, 674 gms. styrene, 302 gms. hydroxyethyl methacrylate, 188 gms. glacial acrylic acid, and 25 gms. of methyl amyl ketone.
2) a premixed suspension/solution of 26.4 gms. VAZO® 88 (1,1′ -azobis(cyanocyclohexane)) and 152 gms. methyl ehtyl ketone.
3) a premixed solution of 82.5 gms. 2-mercaptoethanol and 50 gms. of methyl ketone.

### PART C

The polymerization was carried out at reflux with the temperature dropping throughout the addition to about 122-126 C. Subsequently 37 gms. of methyl amyl ketone was used to flush the lines used for 1 and 3 above; a premixed mixture of 14.1 gms. VAZO® 88 (1,1′ -azobis- (cyanocyclohexane)) and 82 gms. methyl ethyl ketone was added over approximately 60 minutes with temperature continuing to fall to about 115 C.

### PART D

Subsequently, the material was held about 10 minutes at 110-115 C, the flask was equipped with a Barrett trap, and solvent stripped out to a temperature above 136 C, after which 572 gms. of Cardura E-10® (glycidyl ester of Versatic 10 carboxylic acid) and 5 gms. of methyl amyl ketone were added. Heat was again applied and the mixture heated to reflux (about 150-151 C) and held at reflux for three hours.

The properties of the resin were 79-80% non-volatile using time, temperature, and sample weight according to ASTM-2369; 8-9 acid number based on the above non-volatile, Gardner Molt viscosity when reduced to 66.4% with methyl ethyl ketone of J-L and weight average relative molecular weight of approximately 3948 (GPC based on polystyrene standards).

### EXAMPLE 2

Using the same procedure as described in Example 1, except Part B was changed to:

### PART B

Each of the following was concurrently added over approximately 150 minutes:
1) a premixed monomer solution of 499 gms. normal butyl methacrylate, 674 gms. styrene, 302 gms. hydroxy ethyl methacrylate, 188 gms. glacial acrylic acid, and 25 gms. of methyl amyl ketone.
2) a premixed suspension/solution of 26.2 gms VAZO® 88 azobis(cyanocyclohexane) and 152 gms. methyl ethyl ketone.
3) a premixed solution of 65 gms. 2-mercaptoethanol and 50 gms. of methyl amyl ketone.

The properties of the resin were 78-79% non-volatile using time, temperature, sample weight of ASTM-2369; 8-9 acid number based on the above non-volatile, viscosity when reduced to 66.4% with methyl ethyl ketone of Q-R, and weight average relative molecular weight of approximately 5247 GPC based on polystyrene standards).

### EXAMPLE 3

### PART A

A mixture of 387 gms. methyl amyl ketone and 55 gms. of methyl ethyl ketone is placed in a flask fitted with agitator, three addition feed pumps, reflux condenser, thermocouple probe and inert gas inlet. The flask is purged with nitrogen and the mixture is heated to reflux (about 125-131 C) with stirring, while a slow stream of nitrogen is passed through the system.

### PART B

Each of the following is concurrently added over approximately 150 minutes:
1) a premixed monomer solution of 349 gms. butyl methacrylate, 674 gms. styrene, 302 gms. hydroxy ethyl methacrylate, 188 gms. glacial acrylic acid, 150 gms. n-butyl acrylate and 25 gms. of methyl amyl ketone.
2) a premixed suspension/solution of 26.4 gms. VAZO® 88 (1,1′-azobis(cyanocyclohexane)) and 152 gms. methyl ethyl ketone.
3) a premixed solution of 82.5 gms. 2-mercaptoethanol and 50 gms. of methyl amyl ketone.

### PART C

The polymerization is carried out at reflux with the temperature dropping throughout the addition to about 121-124 C. Subsequently a premixed mixture of 14.1 gms. VAZO® 88 (1,1′-azobis-cyanocyclohexane) and 82 gms. methyl ethyl ketone is added over approximately 60 minutes with temperature falling to about 114 C and concurrently 37 gms. of methyl amyl ketone is added to the flask as line flushes.

### PART D

Subsequently, the material is held about 10 minutes at 110-115 C, the flask is equipped with a Barrett trap, and solvent is stripped out to a temperature above 136 C, after which the heat is turned off, 572 gms. of Cardura E-10® (glycidyl ester of Versatic 10 carboxylic acid) and 5 gms. of methyl amyl ketone are added. Heat is again applied and the mixture heated to reflux (about 150- 151 C) and held at reflux for three hours.

### EXAMPLE 4

### PART A

A mixture of 318 gms. methyl amyl ketone and 124 gms. of methyl ethyl ketone was placed in a flask fitted with agitator, three addition feed pumps, reflux condenser, thermocouple probe and inert gas inlet. The flask was purged with nitrogen and the mixture was heated to reflux (about 109 C) with stirring, while a slow stream of nitrogen was passed through the system.

### Part B

Each of the following was concurrently added over approximately 120 minutes:
1) a premixed monomer solution of 389 hydroxy propyl methacrylate, 398 gms. normal butyl methacrylate, 636 gms. styrene, 349 gms. hydroxy ethyl methacrylate, 688 gms. lauryl methacrylate, 25 gms. glacial acrylic acid, and 46 gms. of methyl ethyl ketone.
2) a premixed suspension/solution of 54.6 gms. VAZO® 67 (2,2′-azobis(methylbutyronitrile)) and 100 gms. methyl ethyl ketone.
3) a premixed solution of 88 gms. 2-mercaptoethanol and 46 gms. of methyl amyl ketone.

### PART C

The polymerization was carried out at reflux with the temperature rising throughout the addition to about 122 C. Subsequently a premixed mixture of 10 gms. VAZO® 67 (2,2′-azobis(methylbutyronitrile)) and 50 gms. methyl amyl ketone was added over approximately 75 minutes with temperature remaining about 122-123 C; concurrently methyl amyl ketone was added to the flask predominately as line flushes. The composition was held at that reflux temperature for about 45 minutes.

The properties of the copolymer were 74-76% non-volatile using time, temperature, and sample weight according to ASTM-2369; 8-9 acid number based on the above non-volatile, and a viscosity (J-L) when reduced to 66.4% with methyl ethyl ketone.

### EXAMPLE 5

### PART A

A mixture of 275 gms. methyl amyl ketone and 167 gms. of methyl ethyl ketone was placed in a flask fitted with agitator, three addition feed pumps, reflux condenser, thermocouple probe and inert gas inlet. The flask was purged with nitrogen and the mixture was heated to reflux (about 103 C) with stirring, while a slow stream of nitrogen was passed through the system.

### PART B

Each of the following was concurrently added over approximately 120 minutes:
1) a premixed monomer solution of 390 hydroxy propyl methacrylate, 100 gms. normal butyl methacrylate, 25 gms. glacial acrylic acid, 635 gms. styrene, 350 gms. hydroxyethylmethacrylate, 688 gms. isodecyl meth- acrylate, 297 normal butyl acrylate, and 46 gms. of methyl ethyl ketone.
2) a premixed suspension/solution of 54.6 gms. VAZO® 67 (2,2′ -azobis(methybutyronitrile)) and 100 gms. methyl ethyl ketone.
3) a premixed solution of 88 gms. 2-mercaptoethanol 46 gms. of methyl amyl ketone.

### PART C

The polymerization was carried out at reflux with the temperature rising throughout the addition to about 115 C. Subsequently a premixed mixture of 10 gms. VAZO® 67 (2,2′-azobis(methylbutyronitrile)) and 50 gms. methyl ethyl ketone was added over approximately 70 minutes with temperature falling to about 106 C and concurrently 80 gms. of methyl amyl ketone was added to the flask predominately as line flushes. The copolymer was held at that reflux temperature for about 45 minutes.

The properties of the copolymer were 74-76% non-volatile using time, temperature, and sample weight according to ASTM-2369; 8-9 acid number based on the above non-volatile, and viscosity (G-I) when reduced to 66.4% non-volatile using methyl ethyl ketone.

### COMPARATIVE EXAMPLE 7

Example 13 of United States Patent 4,245,074 was made using Cardura® E-10 as an equivalent of the glycidyl ester of 1,1-dimethyl-1-heptane carboxylic acid and commercially available styrene, acrylic acid, 2-mercaptoethanol, dicumyl peroxide, triphenylbenzyl phosphcnium chloride, nitrogen, and xylene in conventional polymerization apparatus. The acrylic portion (the portion before the triphenylbenzyl phosphonium chloride and Cardura® E-10 addition) refluxed initially at 128 C and fell to 121 C. The resulting product had an acid number of 1.7 (based on solution), a nonvolatile content of only 69-71% (theoretical 80%) using temperatures, weights and times acccording to ASTM-2369 for solids determination and an as-is viscosity of R-S.

A coating made with this material, while acceptable for VOC, had totally unacceptable pot-life and time-to-dust resistance when compared to coatings made with any of the above produced examples. Additionally, a substantial portion of the co-polymer was volatile during solids testing.

## Claims (Claims for the following Contracting State(s): AT, BE, CH, DE, DK, FR, GB, IT, LI, LU, NL, SE)

1. A high solids coating composition comprising a copolymer which has a glass transition from -3°C to 35°C (using the Fox method of Tg calculation) and a relative weight average molecular weight of 1,000 - 7,000 based on GPC using polystyrene standards and which consists of
a) 3-50 weight % n-butyl methacrylate, 3-50 weight % styrene, 9-24 weight % hydroxyethyl methacrylate, 5-14 weight % acrylic acid, 16-43 weight % glycidyl ester of Versatic 10 carboxylic acid, 1-5 weight % 2-mercaptoethanol and 0.5-6 weight % 1,1'-azobis(cyanocyclohexane)
or
b) 14.75 weight % parts hydroxypropyl methacrylate, 15.1 weight % n-butyl methacrylate, 24.11 weight % styrene, 13.23 weight % hydroxyethyl methacrylate, 26.1 weight % lauryl methacrylate, 0.94 weight % acrylic acid, 2.44 weight % 2,2'-azobis (methylbutyronitrile) and 3.33 weight % 2-mercaptoethanol
or
c) 14.78 weight % hydroxypropyl methacrylate, 3.79 weight % n-butyl methacrylate, 0.95 weight % acrylic acid, 24.10 weight % stryene, 13.26 weight % hydroxyethyl methacrylate, 26.10 weight % isodecyl methacrylate, 11.25 weight % n-butyl acrylate, 2.44 weight % 2,2'-azobis (methylbutyronitrile) and 3.33 weight % 2-mercaptoethanol
or
d) which results from the polymerization of ethylenically unsaturated monomers containing hydroxyl groups and other vinyl monomers in the presence of a chain transfer agent wherein the ethylenically unsaturated monomers consist of 3-50 weight % of acrylic and/or α-methyl styrene and 5-14 weight % of acrylic and/or methacrylic acid and 3-50 weight % of a monomethacylate or acrylate ester of an alcohol having 1-12 carbon atoms and selected from the group of lauryl methacrylate, isodecyl methacrylate, lauryl acrylate and stearyl acrylate, optionally in combination with other monomethacrylate or acrylate esters of an alcohol having 1-12 carbon atoms.

2. The high solids coating composition of claim 1 wherein the copolymer results from the polymerization of ethylenically unsaturated monomers as defined in claim 1 and ethylenically unsaturated hydroxyl monomers which are selected from the group of hydroxy functional vinyl compounds such as hydroxyethyl methacrylate, hydroxypropyl methacrylate, hydroxyethyl acrylate, hydroxybutyl acrylate, hydroxybutyl methacrylate, secondary butylacrylate secondary butyl methacrylate, allyl alcohol and hydroxypropyl acrylate.

3. The high solids coating composition of claim 1 or 2 comprising the copolymer as defined in claim 1 or 2 and a crosslinking agent selected from the group consisting of isocyanate and non-isocyanate crosslinkers.

## Claims (Claims for the following Contracting State(s): ES, GR)

1. A process for the preparation of a high solids coating composition comprising a copolymer which has a glass transition from -3° to 35°C (using the Fox method of Tg calculation) and a relative weight average molecular weight of 1,000 - 7,000 based on GPC using polystyrene standards, wherein the copolymer consists of
a) 3-50 weight % n-butyl methacrylate, 3-50 weight % styrene, 9-24 weight % hydroxyethyl methacrylate, 5-14 weight % acrylic acid, 16-43 weight % glycidyl ester of Versatic 10 carboxylic acid, 1 - 5 weight % 2-mercaptoethanol and 0.5-6 weight % 1,1'azobis- (cyanocyclohexane)
or
b) 14.75 weight % parts hydroxypropyl methacrylate, 15,1 weight % n-butyl methacrylate, 24.11 weight % styrene, 13.23 weight % hydroxyethyl methacrylate, 26.1 weight % lauryl methacrylate, 0.94 weight % acrylic acid, 2,44 weight % 2,2'-azobis (methylbutyronitrile) and 3.33 weight % 2-mercaptoethanol
or
c) 14.78 weight % hydroxypropyl methacrylate, 3.79 weight % n-butyl methacrylate, 0.95 weight % acrylic acid, 24.10. weight % styrene, 13.26 weight % hydroxyethyl methacrylate, 26.10 weight % isodecyl methacrylate, 11.25 weightá% n-butyl acrylate, 2.44 weight % 2,2'-azobis (methylbutyronitrile) and 3.33 weight % 2-mercaptoethanol
or
d) wherein the process comprises the preparation of the copolymer by polymerising ethylenically unsaturated monomers containing hydroxyl groups and other vinyl monomers in the presence of a chain transfer agent wherein the ethylenically unsaturated monomers consist of 3-50 weight % of acrylic and/or α-methyl styrene and 5-14 weight % of acrylic and/or methacrylic acid and 3-50 weight % of a monomethacrylate or acrylate ester of an alcohol having 1-12 carbon atoms and selected from the group of lauryl methacrylate, isodecyl methacrylate, lauryl acrylate and stearyl acrylate, optionally in combination with other monomethacrylate or acrylate esters of an alcohol having 1-12 carbon atoms.

2. A process as claimed in claim 1 which comprises the preparation of the copolymer by polymerising ethylenically unsaturated monomers as defined in claim 1 and ethylenically unsaturated hydroxyl monomers which are selected from the group of hydroxy functional vinyl compounds such as hydroxyethyl methacrylate, hydroxypropyl methacrylate, hydroxyethyl acrylate, hydroxybutyl acrylate, hydroxybutyl methacrylate, secondary butylacrylate, secondary butyl methacrylate, allyl alcohol and hydroxypropyl acrylate.

3. A process as claimed in claim 1 or 2 wherein the high solids coating composition comprises the copolymer and a crosslinking agent selected from the group consisting of isocyanate and non-isocyanate crosslinkers.

## Patentansprüche (Patentansprüche für folgende(n) Vertragsstaat(en): AT, BE, CH, DE, DK, FR, GB, IT, LI, LU, NL, SE)

1. Festköperreiche Beschichtungszusammensetzung, enthaltend ein Copolymerisat mit einer Glasübergangstemperatur von -3°C bis 35°C (Tg-Berechnung nach Fox) und einem mittels GPC unter Einsatz von Polystyrolstandards bestimmten relativen gewichtsmittleren Molekulargewicht von 1 000-7 000, bestehend aus
a) 3-50 Gew.-% Methacrylsäure-n-butylester, 3-50 Gew.-% Styrol, 9-24 Gew.-%Methacrylsäurehydroxyethylester, 5-14 Gew.-% Acrylsäure, 16-43 Gew.-% Versatic-10-carbonsäureglycidyl-ester, 1-5 Gew.-% 2-Mercaproethanol und 0,5-6 Gew.-% 1,1'-Azobis(cyano-cyclohexan)).
oder
b) 14,75 Gew.-% Methacrylsäurehydroxypropylester, 15,1 Gew.-% Methacrylsäure-n-butylester, 24,11 Gew.-% Styrol, 13,23 Gew.-% Methacrylsäurehydroxyethylester, 26,1 Gew.-% Methacrylsäurelaurylester, 0,94 Gew.-% Acrylsäure, 2,44 Gew.-% 2,2'-Azobis(methylbutyronitril) und 3,33 Gew.-% 2-Mercaptoethanol
oder
c) 14,78 Gew.-% Methacrylsäurehydroxypropylester, 3,79 Gew.-% Methacrylsäure-n-butylester, 0,95 Gew.-% Acrylsäure, 24,10 Gew.-% Styrol, 13,26 Gew.-% Methacrylsäurehydroxyethylester, 26,10 Gew.-% Methacrylsäureisodocylester, 11,25 Gew.-% Acrylsäure-n-butylester, 2,44 Gew.-% 2,2'-Azobis(methylbutyronitril) und 3,33 Gew.-% 2-Mercaptoethanol bestehen.
oder
d) erhalten aus einer Polymerisation ethylenisch ungesättigter Monomere mit Hydroxylgruppen und anderen Vinylnonomeren in Gegenwart eines Kettenübertragungsmittels, bei der die ethylenisch ungesättigten Monomere zu 3-50 Gew.-% aus Acryl und/oder α-Methylstyrol und zu 5-14 Gew.-% aus Acryl- und/oder Methacrylsäure und zu 3-50 Gew.-% aus einem Monomethacryl- oder Acrylsäureester eines Alkohols mit 1-12 Kohlenstoffatomen bestehen und ausgewählt sind aus der Gruppe bestehend aus Methacrylsäurelaurylester, Methacrylsäureisodecylester, Acrylsäurelaurylester und Acrylsäurestearylester, gegebenenfalls in Kombination mit anderen Monomethacrylsäure- oder Acrylsäureestern eines Alkohols mit 1-12 Kohlenstoffatomen.

2. Festkörperreiche Beschichtungszusammensetzung nach Anspruch 1, dadurch gekennzeichnet, daß es sich bei dem Copolymerisat um das Produkt der Polymerisation ethylenisch ungesättigter Monomere gemäß Anspruch 1 und ethylenisch ungesättigter hydroxylgruppenhaltiger Monomere, ausgewählt aus der Gruppe bestehend aus hydroxyfunktionellen Vinylverbindungen wie Methacrylsäurehydroxylester, Methacrylsäurehydroxypropylester, Acrylsäurehydroxyethylester, Acrylsäurehydroxybutylester, Methacrylsäurehydroxybutylester, Acrylsäure-sec-butylester, Methacrylsäure-sec-butylester, Allylalkohol und Acrylsäurehydroxypropylester, handelt.

3. Festkörperreiche Beschichtungszusammensetzung nach Anspruch 1 oder 2, dadurch gekennzeichnet, daß das Copolymerisat gemäß Anspruch 1 oder 2 und ein Vernetzungsmittel, ausgewählt aus der Gruppe bestehend aus Isocyanat- und Nichtisocyanatvernetzern, enthalten sind.

## Patentansprüche (Patentansprüche für folgende(n) Vertragsstaat(en): ES, GR)

1. Verfahren zur Herstellung einer festkörperreichen Beschichtungszusammensetzung, enthaltend ein Copolymerisat mit einer Glasübergangstemperatur von -3°C bis 35°C (Tg-Berechnung nach Fox) und einem mittels GPC unter Einsatz von Polystyrolstandards bestimmten relativen gewichtsmittleren Molekulargewicht von 1 000-7 000, dadurch gekennzeichnet daß das Copolymerisat aus
a) 3-50 Gew.-% Methacrylsäure-n-butylester, 3-50 Gew.-% Styrol, 9-24 Gew.-% Methacrylsäurehydroxyethylester, 5-14 Gew.-% Acrylsäure, 16-43 Gew.-% Versatic-10-carbonsäureglycidyl-ester, 1-5 Gew.-% 2-Mercaproethanol und 0,5-6 Gew.-% 1,1'-Azobis(cyanocyclohexan).
oder
b) 14,75 Gew.-% Methacrylsäurehydroxypropylester, 15,1 Gew.-% Methacrylsäure-n-butylester, 24,11 Gew.-% Styrol, 13,23 Gew.-% Methacrylsäurehydroxyethylester, 26,1 Gew.-% Methacrylsäurelaurylester, 0,94 Gew.-% Acrylsäure, 2,44 Gew.-% 2,2'-Azobis(methylbutyronitril) und 3,33 Gew.-% 2-Mercaptoethanol
oder
c) 14,78 Gew.-% Methacrylsäurehydroxypropylester, 3,79 Gew.-% Methacrylsäure-n-butylester, 0,95 Gew.-% Acrylsäure, 24,10 Gew.-% Styrol, 13,26 Gew.-% Methacrylsäurehydroxyethylester, 26,10 Gew.-% Methacrylsäureisodocylester, 11,25 Gew.-% Acrylsäure-n-butylester, 2,44 Gew.-% 2,2'-Azobis(methylbutyronitril) und 3,33 Gew.-% 2-Mercaptoethanol besteht oder
d) durch eine Polymerisation ethylenisch ungesättigter Monomere mit Hydroxylgruppen und anderen Vinylmonomeren in Gegenrnart eines Kettenübertragungsmittels, bei der die ethylenisch ungesättigten Monomere zu 3-50 Gew.-% aus Acryl und/oder α-Methylstyrol und zu 5-14 Gew.-% aus Acryl- und/oder Methacrylsäure und zu 3-50 Gew.-% aus einem Monomethacryl- oder Acrylsäureester eines Alkohols mit 1-12 Kohlenstoffatomen bestehen und ausgewählt sind aus der Gruppe bestehend aus Methacrylsäurelaurylester, Methacrylsäureisodecylester, Acrylsäurelaurylester und Acrylsäurestearylester, gegebenenfalls in Kombination mit anderen Monomethacrylsäure- oder Acrylsäureestern eines Alkohols mit 1-12 Kohlenstoffatomen erhalten worden ist.

2. Verfahren nach Anspruch 1, dadurch gekennzeichnet, daß es sich bei dem Copolymerisat um das Produkt der Polymerisation ethylenisch ungesättigter Monomere gemäß Anspruch 1 und ethylenisch ungesättigter hydroxylgruppenhaltiger Monomere ausgewählt, aus der Gruppe bestehend aus hydroxyfunktionellen Vinylverbindungen wie Methacrylsäurehydroxylester, Methacrylsäurehydroxypropylester, Acrylsäurehydroxyethylester, Acrylsäurehydroxybutylester, Methacrylsäurehydroxybutylester, Acrylsäure-sec-butylester, Methacrylsäure-sec-butylester, Allylalkohol und Acrylsäurehydroxvpropylester, handelt.

3. Verfahren nach Anspruch 1 oder 2, dadurch gekennzeichnet, daß die festkörperreiche Beschichtungszusammensetzung das Copolymerisat sowie ein Vernetzungsmittel, ausgewählt aus der Gruppe bestehend aus Isocyanat- und Nichtisocyanatvernetzern, enthält.

## Revendications (Revendications pour l'(les) Etat(s) contractant(s) suivant(s): AT, BE, CH, DE, DK, FR, GB, IT, LI, LU, NL, SE)

1. Composition de revêtement à forte teneur en matières solides comprenant un copolymère possédant une température de transition vitreuse de -3°C à 35°C (le calcul de la Tg étant fait par la méthode de Fox) et une masse moléculaire moyenne relative en poids de 1 000 à 7 000, par rapport à des étalons de polystyrène en CPV, et qui est constituée de
a) 3-50% en poids de méthacrylate de n-butyle, de 3-50% en poids de styrène, de 9-24% en poids de méthacrylate d'hydroxyéthyle, de 5-14% en poids d'acide acrylique, de 16-43% en poids d'ester glycidylique d'acide carboxylique Versatic 10, de 1-5% en poids de 2-mercaptoéthanol et de 0,5-6% en poids de 1,1'-azobis(cyanocyclohexane)
ou de
b) 14,75% en poids de méthacrylate d'hydroxypropyle, de 15,1% en poids de méthacrylate de n-butyle, de 24,11% en poids de styrène, de 13,23% en poids de méthacrylate d'hydroxyéthyle, de 26,1% en poids de méthacrylate de lauryle, de 0,94% en poids d'acide acrylique, de 2,44% en poids de 2,2'-azobis(méthylbutyronitrile) et de 3,33% en poids de 2-mercaptoéthanol
ou de
c) 14,78% en poids de méthacrylate d'hydroxypropyle, de 3,79% en poids de méthacrylate de n-butyle, de 0,95% en poids d'acide acrylique, de 24,1% en poids de styrène, de 13,26% en poids de méthacrylate d'hydroxyéthyle, de 26,1% en poids de méthacrylate d'isodécyle, de 11,25% en poids d'acrylate de n-butyle, de 2,44% en poids de 2,2'-azobis(méthylbutyronitrile) et de 3,33% en poids de 2-mercaptoéthanol
ou
d) qui résulte de la polymérisation de monomères à insaturation éthylénique contenant des groupes hydroxyle et d'autres monomères vinyliques, en présence d'un agent de transfert de chaîne, dans laquelle les monomères à insaturation éthylénique sont constitués de 3-50% en poids d'acrylique et/ou d'α-méthylstyrène et de 5-14% en poids d'acide acrylique et/ou méthacrylique, et de 3-50% en poids d'un ester monométhacrylate ou acrylate d'un alcool comportant 1-12 atomes de carbone et choisis dans le groupe formé du méthacrylate de lauryle, du méthacrylate d'isodécyle, de l'acrylate de lauryle et de l'acrylate de stéaryle, éventuellement en combinaison avec d'autres esters monométhacrylates ou acrylates d'un alcool comportant 1-12 atomes de carbone.

2. Composition de revêtement à forte teneur en matières solides selon la revendication 1, dans laquelle le copolymère résulte de la polymérisation de monomères à insaturation éthylénique selon la revendication 1 et de monomères hydroxylés à insaturation éthylénique qui sont choisis dans le groupe formé des composés vinyliques à fonction hydroxy tels que le méthacrylate d'hydroxyéthyle, le méthacrylate d'hydroxypropyle, l'acrylate d'hydroxyéthyle, l'acrylate d'hydroxybutyle, le méthacrylate d'hydroxybutyle, l'acrylate de s-butyle, le méthacrylate de s-butyle, l'alcool allylique et l'acrylate d'hydroxypropyle.

3. Composition de revêtement à forte teneur en matières solides selon la revendication 1 ou 2, comprenant le copolymère tel que défini dans la revendication 1 ou 2 et un agent de réticulation choisi dans le groupe constitué par les agents de réticulation de type isocyanate et non isocyanate.

## Revendications (Revendications pour l'(les) Etat(s) contractant(s) suivant(s): ES, GR)

1. Procédé de préparation d'une composition de revêtement à forte teneur en matières solides comprenant un copolymère possédant une température de transition vitreuse de -3°C à 35°C (le calcul de la Tg étant fait par la méthode de Fox) et une masse moléculaire moyenne relative en poids de 1 000 à 7 000, par rapport à des étalons de polystyrène en CPV, dans lequel le copolymère est constitué de
a) 3-50% en poids de méthacrylate de n-butyle, de 3-50% en poids de styrène, de 9-24% en poids de méthacrylate d'hydroxyéthyle, de 5-14% en poids d'acide acrylique, de 16-43% en poids d'ester glycidylique d'acide carboxylique Versatic 10, de 1-5% en poids de 2-mercaptoéthanol et de 0,5-6% en poids de 1,1'-azobis(cyanocyclohexane)
ou de
b) 14,75% en poids de méthacrylate d'hydroxypropyle, de 15,1% en poids de méthacrylate de n-butyle, de 24,11% en poids de styrène, de 13,23% en poids de méthacrylate d'hydroxyéthyle, de 26,1% en poids de méthacrylate de lauryle, de 0,94% en poids d'acide acrylique, de 2,44% en poids de 2,2'-azobis(méthylbutyronitrile) et de 3,33% en poids de 2-mercaptoéthanol
ou de
c) 14,78% en poids de méthacrylate d'hydroxypropyle, de 3,79% en poids de méthacrylate de n-butyle, de 0,95% en poids d'acide acrylique, de 24,1% en poids de styrène, de 13,26% en poids de méthacrylate d'hydroxyéthyle, de 26,1% en poids de méthacrylate d'isodécyle, de 11,25% en poids d'acrylate de n-butyle, de 2,44% en poids de 2,2'-azobis(méthylbutyronitrile) et de 3,33% en poids de 2-mercaptoéthanol
ou
d) qui résulte de la polymérisation de monomères à insaturation éthylénique contenant des groupes hydroxyle et d'autres monomères vinyliques, en présence d'un agent de transfert de chaîne, dans laquelle les monomères à insaturation éthylénique sont constitués de 3-50% en poids d'acrylique et/ou d'α-méthylstyrène et de 5-14% en poids d'acide acrylique et/ou méthacrylique, et de 3-50% en poids d'un ester monométhacrylate ou acrylate d'un alcool comportant 1-12 atomes de carbone et choisis dans le groupe formé du méthacrylate de lauryle, du méthacrylate d'isodécyle, de l'acrylate de lauryle et de l'acrylate de stéaryle, éventuellement en combinaison avec d'autres esters monométhacrylates ou acrylates d'un alcool comportant 1-12 atomes de carbone.

2. Procédé selon la revendication 1, qui comprend la préparation du copolymère par polymérisation de monomères à insaturation éthylénique selon la revendication 1 et de monomères hydroxylés à insaturation éthylénique qui sont choisis dans le groupe formé des composés vinyliques à fonction hydroxy tels que le méthacrylate d'hydroxyéthyle, le méthacrylate d'hydroxypropyle, l'acrylate d'hydroxyéthyle, l'acrylate d'hydroxybutyle, le méthacrylate d'hydroxybutyle, l'acrylate de s-butyle, le méthacrylate de s-butyle, l'alcool allylique et l'acrylate d'hydroxypropyle.

3. Procédé selon la revendication 1 ou 2, dans lequel la composition de revêtement à forte teneur en matières solides comprend le copolymère et un agent de réticulation choisi dans le groupe constitué par les agents de réticulation de type isocyanate et non isocyanate.
